# EUROPÄISCHE PATENTSCHRIFT

(11) **EP 3 310 665 B1**
(45) Veröffentlichungstag und Bekanntmachung des Hinweises auf die Patenterteilung: **26.06.2019**
(21) Anmeldenummer: 16725825.0
(22) Anmeldetag: 23.05.2016
(51) Int. Cl.: B65B 35/36, B65G 47/08, B65G 47/52, B65G 47/68, B65B 35/44, B65B 35/54, B65B 59/00, B65B 35/16, B65B 35/24

(54) **VERFAHREN UND HANDHABUNGSVORRICHTUNG**
METHOD AND MANIPULATOR
MÉTHODE ET MANIPULATEUR

(30) Priorität: 18.06.2015 DE 102015109734
(43) Veröffentlichungstag der Anmeldung: 25.04.2018
(73) Patentinhaber: Krones Aktiengesellschaft, 93073 Neutraubling (DE)
(72) Erfinder: UNTERSEHER, Josef, 93073 Neutraubling (DE); HARTL, Michael, 93073 Neutraubling (DE)
(74) Vertreter: Benninger, Johannes
(86) Internationale Anmeldenummer: PCT/EP2016/061583
(87) Internationale Veröffentlichungsnummer: WO 2016/202532

(56) Entgegenhaltungen:
- EP-A1- 2 792 626
- WO-A1-97/27108
- DE-A1-102013 219 847

## Beschreibung

Die vorliegende Erfindung betrifft ein Verfahren und eine Handhabungsvorrichtung gemäß den Merkmalen der Oberbegriffe der Ansprüche 1 und 7.

In der Verpackungsindustrie ist es häufig notwendig, die in mehreren Parallelspuren ankommenden Artikel und / oder Artikelzusammenstellungen, Gebinde o.ä. für die nachfolgenden Bearbeitungsschritte entsprechend umzugruppieren. Beispielsweise kann es für die weitere Bearbeitung notwendig sein, die in n Parallelreihen ankommenden Gebindeströme auf (n-1) oder (n-2) Reihen von Gebindeströmen zu reduzieren.

Gemäß dem vorbekannten Stand der Technik ist es hierbei notwendig, zwischen den einzelnen Gebinden auf der weiterführenden Transportspur jeweils Abstände zu schaffen, um die Gebinde aus der aufzulösenden Spur in diesen Abständen zwischen den Gebinden der Transportspur unterzubringen. Will man beispielsweise zwei Spuren zu einer einzigen Spur zusammenführen, ist es notwendig, in der Transportspur jeweils einen Abstand zwischen aufeinanderfolgenden Gebinden zu bilden, der jeweils mindestens eine Gebindelänge aufweist. Nach dem Einteilvorgang bzw. nach dem Bilden der Abstände kann nunmehr immer ein Gebinde aus der aufzulösenden Spur in einen Abstand zwischen aufeinanderfolgenden Gebinden der weiterführenden Transportspur geschoben werden. Bei dieser Lösung wird durch eine entsprechende Handhabungseinrichtung bzw. Greifreinrichtung immer nur ein Gebinde bearbeitet und verschoben. Die Leistung einer solchen Vorrichtung ist entsprechend gering. Der Einteilvorgang kann kontinuierlich gestaltet werden.

Aus dem Stand der Technik ist weiterhin bekannt, dass eine Aufteilung der in einem Strom ankommenden Gebinde in sogenannten Gebindegruppen erfolgt. Eine definierte Anzahl von Gebinden wird als Gebindegruppe abgeteilt. Auf die Gebindegruppe folgt ein entsprechender Abstand, wobei die Länge des Abstands mindestens der Länge der Gebindegruppe entspricht. Somit wird zwischen aufeinanderfolgenden Gebindegruppen jeweils ein Abstand ausgebildet, wobei der Abstand mindestens die Länge einer Gebindegruppe in Transportrichtung aufweist. Nach dem Einteilvorgang bzw. nach dem Bilden der Abstände kann nunmehr immer eine Gebindegruppe aus der aufzulösenden Spur in einen Abstand zwischen aufeinanderfolgenden Gebindengruppen der weiterführenden Transportspur geschoben werden. Bei dieser Lösung wird durch eine entsprechende Handhabungseinrichtung bzw. Greifeinrichtung jeweils eine Gebindegruppe bearbeitet und verschoben, d.h., es werden immer mehrere Gebinde eingeteilt und zwischen den Gebindegruppen wird jeweils ein entsprechend großer Abstand generiert, um eine Gebindegruppe mit derselben Anzahl an Gebinden aus der aufzulösenden Spur in die Transportspur verschieben zu können. Dieser Einteilvorgang ist nicht kontinuierlich sondern pulsierend.

Das Dokument WO97/27108 A1 beschreibt eine Vorrichtung, die ein Verfahren durchführt, bei dem zu verpackende Gegenstände entlang mindestens zweier nebeneinander und parallel zueinander angeordneter Arbeitsspuren bewegt werden. Die Vorrichtung ist mit einer Einrichtung zum Stapeln der Gegenstände ausgestattet, die um eine Stufe versetzt ist. Nach Bildung der Artikelstapel, werden diese, ebenfalls versetzt um eine Stufe, durch erste Fördermittel bewegt und durch andere Fördermittel zu einer Verpackungslinie gefördert, in der die Stapel in einer Reihe angeordnet sind.

Die Offenlegungsschrift EP 2792626 A1 offenbart ein Verfahren sowie eine Vorrichtung zum Gruppieren von Artikeln. Die Artikel werden in wenigstens einer regelmäßigen Reihe hintereinander in horizontaler Richtung befördert und mittels wenigstens dreier, jeweils in wechselnden Paaren zusammenwirkender Klemmleisten, aufgeteilt und seitlich in Fördergassen verschoben. Dabei wirkt bei jedem Verschiebevorgang eine mittlere Klemmleiste jeweils mit einer der äußeren Klemmleisten zusammen und bildet mit dieser ein Klemmleistenpaar zur temporären seitlichen Fixierung der kontaktierten Artikelgruppe und zu deren seitlicher Verschiebung nach links oder rechts in die jeweilige Fördergasse.

Die Offenlegungsschrift DE 102013219847 A1 beschreibt eine Vorrichtung und ein Verfahren zum Umgang mit Artikeln. Die Vorrichtung umfasst zumindest eine erste Transportstrecke für einen ersten Artikelstrom aus geschlossenen und/oder lückenhaft hintereinander gereihten Artikeln, mindestens eine entlang der ersten Transportstrecke angeordnete Entnahmevorrichtung mit mindestens einem mit veränderlicher Winkelgeschwindigkeit um eine Drehachse drehbar angetriebenen Aufnahmeelement, welches wenigstens eine radial von der Drehachse beabstandete Artikelaufnahme für zumindest einen Artikel aufweist.

Aufgabe der Erfindung ist es, bei einem kontinuierlichen Zulauf von Gebinden eine hohe Leistung beim Umgruppieren von Gebindeströmen zu erreichen.

Die obige Aufgabe wird durch ein Verfahren und eine Vorrichtung gemäß der unabhängigen Ansprüche gelöst. Weitere vorteilhafte Ausgestaltungen werden durch die Unteransprüche beschrieben.

Die Erfindung betrifft ein Verfahren zum Umgruppieren von in n Reihen angelieferten Artikeln bzw. Artikelgruppen bzw. ein Verfahren zum Umgruppieren von Gebindeströmen mit kontinuierlichem Zulauf. Insbesondere ist bei dem Verfahren vorgesehen, dass in n Reihen in einer Transportrichtung und mit einer Transportgeschwindigkeit geförderte Artikel oder Artikelgruppen auf eine geringere Anzahl von weiterführenden Transportreihen, insbesondere auf (n-1) oder (n-2) oder (n-3) weiterführende Transportreihen, reduziert werden, weil beispielsweise die nachfolgende Maschine nur eine geringere Anzahl an Parallelreihen von Artikeln oder Artikelgruppen verarbeiten kann. Im Folgenden wird anstelle von Artikel oder Artikelgruppen der Begriff Gebinde verwendet.

Für das Verfahren ist es notwendig, dass zumindest die in jeweils einer weiterführenden Transportreihe transportierten Gebinde zueinander beabstandet sind. D.h. zwischen aufeinander folgenden Gebinden einer einlaufenden und anschließend weiterführenden Transportreihe ist jeweils ein Abstand ausgebildet. Der Abstand zwischen den einzelnen Gebinden innerhalb einer Transportreihe, d.h. die Länge des Abstands zwischen zwei Gebinden, entspricht mindestens einer Längserstreckung eines Gebindes in Transportrichtung. Der Abstand weist somit eine Größe auf, die ausreicht, dass innerhalb des Abstands ein weiteres Gebinde angeordnet werden kann.

Die Gebinde können bereits entsprechend beabstandet aus der vorherigen Verarbeitungsmaschine kommen, so dass keine Anpassung der Abstände zwischen den Gebinden innerhalb einer Reihe notwendig ist. Häufiger wird es jedoch der Fall sein, dass die Gebinde ohne Abstand zueinander oder aber mit einem falschen Abstand zueinander, insbesondere einem zu kleinen oder aber einem zu großen Abstand, in die Handhabungsvorrichtung einlaufen würden. In diesem Fall ist es notwendig, vor der Handhabungsvorrichtung einen Einteiler oder eine andere geeignete Vorrichtung anzuordnen, die die benötigte gleichmäßige Anordnung und / oder Beabstandung der Gebinde innerhalb der Reihen herstellt.

Zumindest die Gebinde der weiterführenden Transportreihe müssen in regelmäßigen Abständen zueinander angeordnet sein. Gemäß einer bevorzugten Ausführungsform sind sowohl die Gebinde der mindestens einen aufzulösenden Reihe als auch die Gebinde zumindest einer benachbarten weiterführenden Transportreihe in regelmäßigen Abständen zueinander angeordnet.

Das Verfahren sieht vor, dass mindestens zwei Gebinde einer aufzulösenden Reihe gleichzeitig in eine der Anzahl der Artikel oder Artikelgruppen entsprechenden Anzahl von aufeinanderfolgenden Abständen zwischen aufeinanderfolgenden Gebinden einer zur aufzulösenden Reihe benachbarten, insbesondere parallelen, weiterführenden Transportreihe überführt werden.

Gemäß einer Ausführungsform der Erfindung werden die mindestens zwei Gebinde der mindestens einen aufzulösenden Reihe gleichzeitig gegriffen und in eine entsprechende Anzahl aufeinander folgender Abstände innerhalb der weiterführenden Transportreihe verschoben. Dabei ist vorgesehen, dass die Geschwindigkeit, mit der die mindestens zwei Gebinde bewegt werden, gegenüber der Transportgeschwindigkeit der Gebinde der weiterführenden Transportreihe verzögert wird. Alternativ kann vorgesehen sein, dass die Geschwindigkeit, mit der die mindestens zwei Gebinde bewegt werden, gegenüber der Transportgeschwindigkeit der Gebinde der weiterführenden Transportreihe erhöht wird.

Weiterhin kann auf die mindestens zwei Gebinde der aufzulösenden Reihe eine zusätzliche Richtungskomponente senkrecht zur Transportrichtung aufgebracht werden, so dass die Gebinde von einer ersten Ausgangsposition in der aufzulösenden Reihe in eine zweite Endposition innerhalb aufeinander folgender Abstände zwischen benachbarten Gebinden der weiterführenden Transportreihe überführt werden.

Anschließend werden die umgruppierten Gebinde innerhalb der weiterführenden Transportreihe mit der ursprünglichen Transportgeschwindigkeit weiter transportiert. Insbesondere werden die umgruppierten Gebinde innerhalb der weiterführenden Transportreihe mit der Transportgeschwindigkeit des Transportmittels bewegt.

Die Erfindung betrifft weiterhin eine Vorrichtung mit einem Transportmittel und einer als Greifeinrichtung ausgebildeten Handhabungsvorrichtung, die so konfiguriert ist, dass mit dieser im Betrieb der Vorrichtung ein vorbeschriebenes Verfahren ausgeführt wird. Insbesondere ist die Handhabungsvorrichtung geeignet zum Reduzieren von in n Reihen auf einem Transportmittel in einer Transportrichtung und in einer Transportgeschwindigkeit geförderten Gebinden auf eine geringere Anzahl an weiterführenden Transportreihen, insbesondere auf (n-1) oder (n-2) oder (n-3) weiterführende Transportreihen. Die Handhabungsvorrichtung der Vorrichtung ist derart ausgebildet, dass mit dieser mindestens zwei Gebinde aus einer aufzulösenden Reihe derart neu positioniert werden, dass die in einer ersten Anzahl n von Reihen einlaufenden Gebinde anschließend in einer zweiten reduzierten Anzahl von beispielsweise (n-1) oder (n-2) oder (n-3) weiterführenden Transportreihen zu weiteren Verarbeitungsmaschinen weitergeleitet werden.

Wie bereits oben beschrieben, müssen zumindest die Gebinde in der mindestens einen weiterführenden Transportreihe jeweils einen definierten Abstand zueinander aufweisen, der immer näherungsweise identisch ist und insbesondere eine definierte Größe aufweist.

Die Handhabungseinrichtung umfasst eine Greifeinrichtung, die gleichzeitig mindestens zwei Gebinde einer aufzulösenden Reihe greift. Anschließend werden die mindestens zwei Gebinde durch die Greifeinrichtung in mindestens zwei aufeinanderfolgende Abstände zwischen aufeinander folgenden Gebinden einer parallelen, benachbarten, weiterführenden Transportreihe überführt. In der parallelen, weiterführenden Transportreihe sind die ankommenden Gebinde zueinander beabstandet. Insbesondere werden die Gebinde aus der aufzulösenden Reihe zwischen die Gebinde der weiterführenden Transportreihe eingeschoben und somit eine verdichtete Gebindeanordnung innerhalb der weiterführenden Transportreihe erzeugt.

Gemäß einer Ausführungsform der Erfindung umfasst jede Greifeinrichtung mindestens zwei Greifeinheiten zum simultanen Greifen von mindestens zwei Gebinden der aufzulösenden Reihe.
Gemäß einer ersten Ausführungsform der Erfindung ist vorgesehen, dass die Gebinde innerhalb der mindestens einen aufzulösenden Reihe denselben Abstand zueinander aufweisen wie die Gebinde in der mindestens einen einlaufenden und anschließend weitergeführten parallelen Transportreihe. Die Greifeinrichtung greift gleichzeitig mindestens zwei Gebinde der aufzulösenden Reihe unter Beibehaltung des Abstands zwischen den Gebinden. Anschließend werden die mindestens zwei Gebinde durch die Greifeinrichtung unter Beibehaltung des Abstands in mindestens zwei aufeinanderfolgende Abstände zwischen den beabstandet aufeinander folgenden Gebinden einer parallelen, benachbarten, weiterführenden Transportreihe überführt. Insbesondere werden die Gebinde aus der aufzulösenden Reihe somit zwischen die Gebinde der weiterführenden Transportreihe eingeschoben und somit eine verdichtete Gebindeanordnung auf der weiterführenden Transportreihe erzeugt.

Gemäß einer weiteren Ausführungsform der Erfindung kann vorgesehen sein, dass die Gebinde innerhalb der mindestens einen aufzulösenden Reihe einen abweichenden Abstand oder weitgehend keinen Abstand zueinander aufweisen. Die mindestens zwei Gebinde werden durch die mindestens zwei Greifeinheiten der Greifeinrichtung gegriffen. Die Greifeinheiten sind variabel zueinander einstellbar. Insbesondere kann vorgesehen sein, dass die Gebinde durch die Greifeinrichtung gegriffen werden, der Abstand zwischen den Gebinden durch Verstellen der mindestens zwei Greifeinheiten der Greifeinrichtung zueinander eingestellt wird und die Gebinde in die weiterführende Transportreihe übergeschoben und entsprechend in die aufeinander folgenden Abstände zwischen den in der weiterführenden Transportreihe einlaufenden Gebinden eingegliedert werden.

Eine weitere Ausführungsform sieht vor, dass die Greifeinrichtung zwei einander gegenüberliegend angeordnete Greifflächen umfasst, zwischen denen die mindestens zwei aus der aufzulösenden Reihe gegriffenen Gebinde gehalten werden. Der Abstand der Greifflächen zueinander ist insbesondere einstellbar, beispielsweise sind die Greifflächen jeweils schwenkbeweglich an einer Drehachse gelagert. Die Drehachsen sind parallel zur Transportrichtung ausgerichtet. Durch gegensinniges Verschwenken der Greifflächen um die jeweilige Drehachse können die Greifflächen aufeinander zu oder voneinander weg bewegt werden. Dadurch können die Gebinde durch die Greifflächen fixiert oder aber losgelassen werden.

Die Greifflächen sind jeweils in mindestens zwei Greifbereiche unterteilt und vorzugsweise spiegelbildlich zueinander ausgebildet. Jeweils zwei einander direkt gegenüberliegende Greifbereiche der einander gegenüberliegenden Greifflächen bilden somit eine Greifeinheit für ein Gebinde.

Weiterhin ist vorgesehen, dass die Greifbereiche einer Greiffläche zueinander beabstandet sind. Der Abstand zwischen den Greifbereichen einer Greiffläche entspricht in Transportrichtung in etwa der Länge eines Abstands zwischen den Gebinden innerhalb einer Reihe. Die Greifbereiche selbst weisen parallel zur Transportrichtung eine Länge auf, die in etwa der Längserstreckung der Gebinde in Transportrichtung entspricht. Somit werden die Gebinde jeweils zwischen einander gegenüberliegenden Greifbereichen großflächig gehalten. Dadurch wird sichergestellt, dass sich beim Verschieben der mindestens zwei Gebinde auf der Transportebene des Transportmittels durch die Greifeinrichtung die mindestens zwei Gebinde nicht verdrehen o.ä., sondern ihre ursprüngliche Ausrichtung und Anordnung zueinander sicher beibehalten.

Vorzugsweise ist im Bereich der Beabstandung zweier Greifbereiche einer Greiffläche eine Öffnung ausgebildet, deren Größe mindestens einem maximalen Querschnitt des Gebindes in einer Ebene parallel zur Transportrichtung entspricht.

Die Greifeinrichtung ist oberhalb des Transportmittels angeordnet. Zum Greifen von mindestens zwei Gebinden der aufzulösenden Reihe wird die Greifeinrichtung über den Gebinden abgesenkt und derart positioniert, dass die mindestens zwei Gebinde jeweils innerhalb der mindestens zwei Greifeinheiten angeordnet sind. Insbesondere ist ein erstes Gebinde innerhalb einer ersten Greifeinheit der Greifeinrichtung positioniert, weiterhin ist ein zweites Gebinde innerhalb einer zweiten Greifeinheit der Greifeinrichtung positioniert, etc. Anschließend werden die Greifflächen bzw. die Greifbereiche der Greifflächen an die Gebinde angedrückt und die Gebinde somit jeweils durch die zugeordneten Greifeinheiten der Greifeinrichtung gehalten. Während die Greifeinrichtung abgesenkt, positioniert und die Gebinde innerhalb der Greifeinheiten fixiert werden, kann es notwendig sein, dass sich die Greifeinrichtung mit Transportgeschwindigkeit in Transportrichtung bewegt. Für die anschließende Umgruppierung der mindestens zwei Gebinde ist es notwendig, eine Bewegungsgeschwindigkeit der Gebinde relativ zur Transportgeschwindigkeit zu verändern, d.h. entweder zu erhöhen oder aber zu reduzieren. Weiterhin ist es notwendig, eine Bewegungskomponente senkrecht zur Transportrichtung auf die Gebinde aufzubringen, um diese in Richtung der weiterführenden Transportreihe und insbesondere in die Abstände zwischen den Gebinden der weiterführenden Transportreihe zu verschieben.

Gemäß einer Ausführungsform der Erfindung werden die Greifflächen durch austauschbare Formatteile gebildet. Insbesondere sind die Formatteile über einen Schnellverschlussmechanismus an der Greifeinrichtung befestigt. Durch Austausch der Formatteile ist es schnell und einfach möglich, die Greifeinrichtung an unterschiedliche Gebindeformate, beispielsweise unterschiedliche Gebindegrößen o.ä., anzupassen. Die Vorrichtung kann beispielsweise bei einem Produktwechsel schnell und einfach an das neue Produkt angepasst werden.

Gemäß einer Ausführungsform der Erfindung weist die Greifeinrichtung Rotationsmittel auf. Durch die Rotationsmittel können die durch die Greifeinrichtung gehaltenen mindestens zwei Artikel oder Artikelgruppen oder Gebinde beim Überführen in die benachbarte, weiterführende Transportreihe gedreht werden. Besonders bevorzugt weist die Greifeinrichtung eine Mehrzahl von Rotationsmitteln auf. Jeder Greifeinheit ist ein Rotationsmittel zugeordnet. Diese können individuell steuerbarbar sein, so dass jedes Gebinde der aufzulösenden Reihe beim Überführen in die benachbarte, weiterführende Transportreihe individuell gedreht werden kann.

Zusammengefasst werden die Gebinde so eingeteilt, dass nach jedem Gebinde ein Abstand ausgebildet ist, der ausreichend groß ist, um ein weiteres Gebinde in diesen Abstand einzuschieben. Gemäß einer Ausführungsform laufen die Gebinde in allen Reihen synchron zueinander, bzw. sind zueinander ausgerichtet. Es werden in der aufzulösenden Reihe mehrere Gebinde mit einem unterbrochenen Greifer gegriffen. Der Greifer befindet sich immer über den Gebinden, nur in dem Bereich, in dem Gebinde gegriffen werden sollen, werden die Greifflächen nach unten abgesenkt bzw. heruntergeschwenkt o.ä. Die gegriffenen Gebinde werden in die Abstände zwischen den Gebinden der weiterführenden Transportreihe geschoben.

Dadurch kann, insbesondere bei einem kontinuierlichen Zulauf an Gebinden, eine besonders hohe Leistung beim Umgruppieren der Gebindeströme erzielt werden. Die Vorrichtung kann mit nur wenigen Robotern o.ä. realisiert werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 bis 7 zeigen schematisch den Ablauf einer Umgruppierung von dreispurig einlaufenden Gebinden in zweispurig auslaufende Gebinde.
Figur 8 zeigt eine Ausführungsform eines Greifers.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

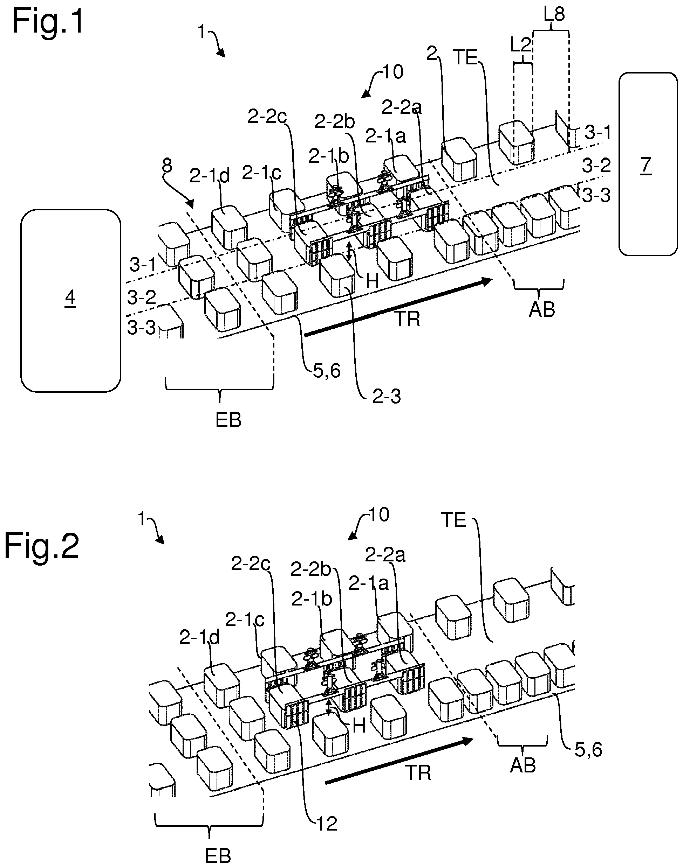

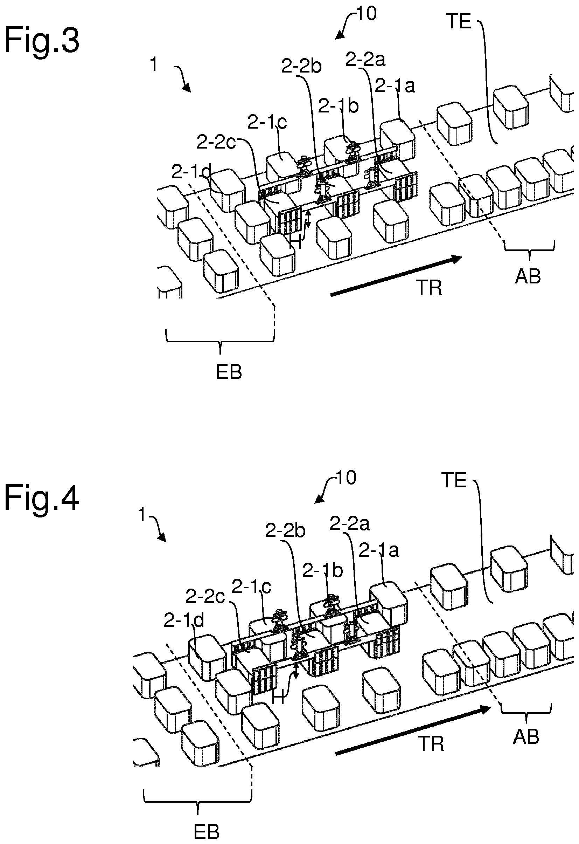

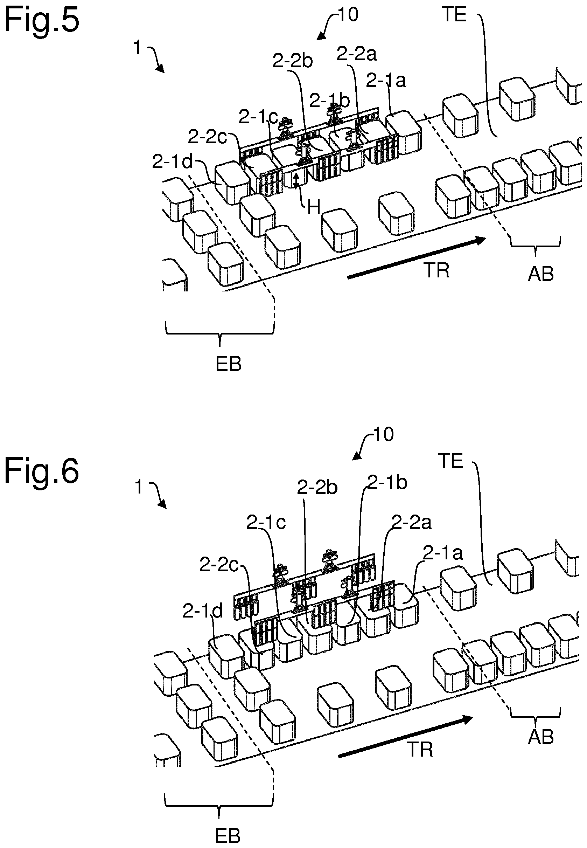

Figuren 1 bis 7 zeigen schematisch den Ablauf einer Umgruppierung von dreispurig einlaufenden Gebinden 2 in zweispurig auslaufende Gebinde 2 vermittels einer Handhabungsvorrichtung 1. Die Gebinde 2 laufen entweder bereits beabstandet von einer die Gebinde 2 vorher bearbeitenden Maschine, beispielsweise aus einem Schrumpftunnel oder ähnlichem, über ein Transportmittel 5, beispielsweise ein Förderband 6, einen Mattenkettenförderer o.ä. in Transportrichtung TR ein und werden in Richtung einer weiteren Verarbeitungsvorrichtung 7 weiter geleitet. Alternativ werden die Gebinde 2 beispielsweise in einem Massenstrom (nicht dargestellt) angeliefert und durch eine - nur schematisch angedeutete - Einteilvorrichtung 4 in drei Parallelreihen 3-1, 3-2 und 3-3 eingeteilt. Dabei werden zwischen den einzelnen Gebinden 2 in jeder der Parallelreihen 3-1, 3-2, 3-3 jeweils Abstände 8 ausgebildet. Anschließend werden die durch Abstände 8 unterbrochenen Gebindereihen auf der Transportebene TE des Transportmittels 5 in Transportrichtung TR bewegt.

Die Gebinde 2 weisen in Transportrichtung TR eine erste Längserstreckung bzw. erste Länge L2 auf. Die Abstände 8 weisen in Transportrichtung TR eine zweite Längserstreckung bzw. zweite Länge L8 auf. Die zweite Länge L8 der Abstände 8 entspricht mindestens der ersten Länge L2 der Gebinde 2. Vorzugsweise entspricht die zweite Länge L8 der Abstände 8 mindestens 110% der ersten Länge L2 der Gebinde 2.

Die Gebinde 2 sind in einem Eintrittsbereich EB der Handhabungsvorrichtung 1 so eingeteilt, dass nach jedem Gebinde 2 ein Abstand 8 ausgebildet ist, wobei der Abstand 8 ausreichend groß ausgestaltet ist, dass ein weiteres Gebinde 2 in den Abstand 8 geschoben werden kann.

Die Gebinde 2 laufen in allen Spuren beziehungsweise Parallelreihen 3-1, 3-2, 3-3 synchron zueinander bzw. sind zueinander ausgerichtet.

Im vorliegenden Ausführungsbeispiel wird der dreireihige Transport in den drei Reihen 3-1, 3-2, 3-3 auf einen zweireihigen Transport in den Reihen 3-1 und 3-3 überführt. Hierbei werden in der aufzulösenden Reihe 3-2 drei Gebinde 2 mit einem sogenannten unterbrochenen Greifer 10 gegriffen. Der Greifer 10 ist derart ausgebildet, dass er zeitgleich drei in der mittleren, aufzulösenden Reihe 3-2 ankommende Gebinde 2 festhält und in eine benachbarte Reihe 3-1 oder 3-3 verschiebt, so dass die drei vom Greifer 10 gehaltenen Gebinde 2 jeweils in die Abstände 8 zwischen Gebinden 2 der jeweiligen weiterführenden Reihe 3-1 oder 3-3 eingeschoben werden.

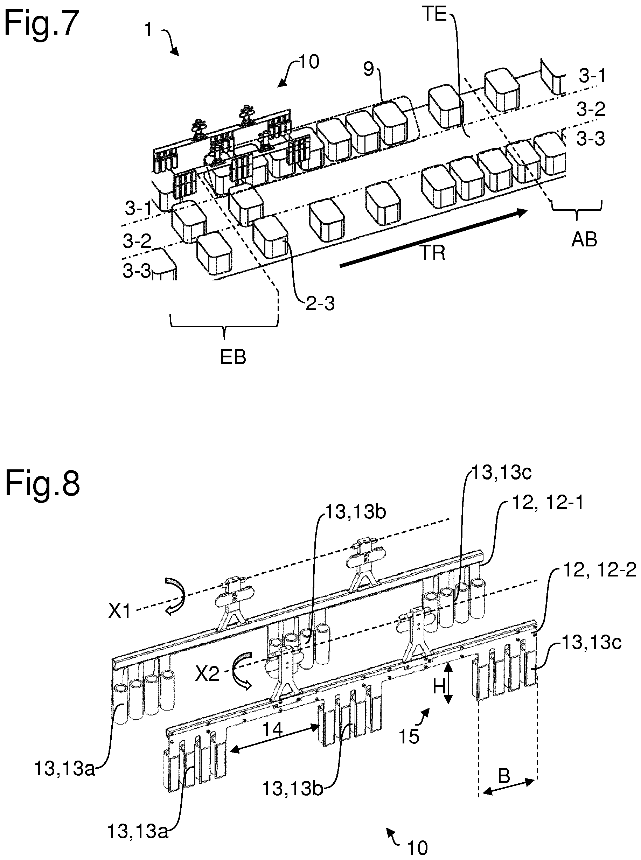

Insbesondere ist in den Figuren 1 bis 7 dargestellt, wie vermittels eines Greifers 10 drei Gebinde 2-2a, 2-2b und 2-2c zeitgleich aus der mittleren, aufzulösenden Parallelreihe 3-2 in die drei Abstände 8 zwischen den vier Gebinden 2-1a, 2-1b, 2-1c und 2-1d der äußeren Parallelreihe 3-1 eingeschoben werden. Dabei entsteht innerhalb der weiterführenden Reihe bzw. Transportreihe 3-1 eine Gebindeanordnung 9 (vergleiche Figur 7), bei der abwechselnd ein Gebinde 2-2 aus der mittleren, aufzulösenden Reihe 3-2 und ein Gebinde 2-1 aus der äußeren Reihe 3-1 in Transportrichtung TR nacheinander angeordnet sind.

In einem nächsten, nicht dargestellten Verfahrensschritt werden die nächsten drei in der mittleren Reihe 3-2 ankommenden Gebinde 2-2 jeweils zwischen Gebinde 2-3 der anderen äußeren, weiterführenden Reihe 3-3 eingeschoben.

Somit befinden sich in einem so genannten Austrittsbereich AB der Handhabungsvorrichtung 1, der in Transportrichtung TR hinter dem Greifer angeordnet ist, nur noch Gebinde 2 in den äußeren, weiterführenden Reihen 3-1 und 3-3, die einer weiteren Verarbeitungsvorrichtung 7 (vergleiche Figur 1) zugeführt werden können. Die mittlere Reihe 3-2 wird also, bevor sie in den Austrittsbereich AB eintritt, komplett aufgelöst, indem die Gebinde 2-2 aus der mittleren Reihe in die äußeren Reihen 3-1 und / oder 3-3 verschoben werden.

Der Greifer 10 ist immer oberhalb der Gebinde 2 angeordnet. Nur dort, wo Gebinde 2 gegriffen werden sollen, gehen die Greifflächen 12 des Greifers 10 nach unten (vgl. Figur 8). Die gegriffenen Gebinde 2-2 aus der mittleren Reihe 3-2 werden in die Abstände 8 zwischen den Gebinden 2-1 der äußeren Reihe 3-1 geschoben oder aber in die Abstände 8 zwischen den Gebinden 2-3 der äußeren Reihe 3-3 geschoben.

Das in den Figuren 1 bis 7 dargestellte Ausführungsbeispiel zeigt, wie aus einem dreireihigen Gebindetransport ein zweireihiger Gebindetransport herbeigeführt wird. Um beispielsweise einen zweireihigen Gebindetransport in einen einreihigen Gebindetransport zu überführen, werden die Gebinde aus der aufzulösenden Reihe in entsprechende Abstände zwischen den Gebinden der weiterführenden Transportreihe eingeschoben. Das heißt, der entsprechende Greifer verschiebt die Gebinde aus der aufzulösenden Reihe nicht abwechselnd nach rechts und links, sondern immer nur in dieselbe Richtung.

Figur 8 zeigt eine Ausführungsform eines Greifers 10. Dieser ist insbesondere derart ausgebildet, dass er drei Gebinde 2 (vgl. Figuren 1 bis 7) gleichzeitig greifen und verschieben kann.

Der dargestellte Greifer 10 weist zwei parallel zueinander angeordnete Greifflächen 12-1, 12-2 auf. Diese sind relativ zueinander beweglich. Beispielsweise sind die Greifflächen 12-1, 12-2 jeweils an einer Schwenkachse X1, X2 schwenkbeweglich angeordnet. Die Schwenkachsen X1, X2 sind jeweils parallel zur Transportrichtung TR des Transportmittels 4 der Handhabungsvorrichtung 1 (vgl. Figuren 1 bis 7) ausgerichtet. Durch Verschwenken der Greifflächen 12 um die jeweilige Schwenkachse X1, X2 können die Greifflächen 12 an die mindestens zwei Gebinde 2 der aufzulösenden Reihe 3-2 (vergleiche Figuren 1 bis 7) angedrückt oder von diesen wegbewegt werden.

Die Greifflächen 12 des Greifers 10 sind in drei voneinander beabstandete Greifbereiche 13a, 13b, 13c unterteilt. Jeder Greifbereich dient dem Greifen eines Gebindes. Insbesondere sind die beiden Greifflächen 12-1, 12-2 spiegelbildlich zueinander ausgebildet, so dass sich jeweils Greifbereiche 13a, 13b, 13c einander gegenüber liegen. Jeder Greifbereich 13 weist eine Breite B auf. Die Breite B entspricht beispielsweise in etwa der Längserstreckung bzw. Länge L2 eines Gebindes 2 in Transportrichtung TR (vergleiche Figur 1). Zwischen den Greifbereichen 13a, 13b, 13c einer Greiffläche 12 ist jeweils ein Abstand 14 ausgebildet. Dieser Abstand 14 entspricht mindestens der Länge L2 eines Gebindes 2. Vorzugsweise entspricht der Abstand 14 der Länge L8 eines Abstands 8 zwischen zwei Gebinden 2 (vergleiche Figur 1) und beträgt somit vorzugsweise mindestens 110% der Länge L2 eines Gebindes 2.

Der Greifer 10 wird derart über den in der aufzulösenden Reihe 3-2 angeordneten Gebinde 2-2 angeordnet und über diese abgesenkt, dass jeweils ein Gebinde 2-2 zwischen den korrespondierenden Greifbereichen 13a, 13b, 13c der beiden Greifflächen 12-1, 12-2 angeordnet ist. Im Bereich des Abstandes 14 zwischen zwei Greifbereichen 13 ist eine Höhe H zu einer Transportebene TE des Transportmittels 5 ausgebildet - siehe Figuren 1 bis 5. Insbesondere wird durch den Abstand 14 und die Höhe H eine Öffnung 15 definiert, durch die ein Gebinde 2 seitlich hindurchtreten kann.

Der Greifer 10 greift drei Gebinde 2-2 aus der aufzulösenden Reihe 3-2. Die Geschwindigkeit der durch den Greifer 10 festgehaltenen Gebinde 2-2 wird dadurch gegenüber der Transportgeschwindigkeit des Transportmittels 5 und somit gegenüber der Geschwindigkeit der restlichen Gebinde 2 auf dem Transportmittel 5 reduziert. Durch koordiniertes Verschieben der festgehaltenen Gebinde 2-2 in eine Bewegungsrichtung orthogonal zur Transportrichtung TR werden diese in die Abstände 8 zwischen den Gebinden 2-1 der äußeren Reihe 3-1 oder in die Abstände 8 zwischen den Gebinden 2-3 der äußeren Reihe 3-3 eingeschoben. Die Öffnungen 15 zwischen den Greifbereichen 13 des Greifers 10 verhindern eine Kollision der Gebinde 2-1 oder 2-3 der jeweiligen äußeren Reihe 3-1 oder 3-3 mit dem Greifer 10.

Das zeitgleiche Überführen von mindestens zwei Gebinden 2-2 aus der aufzulösenden Reihe 3-2 in eine der weiterführenden Reihen 3-1 oder 3-3 erfolgt dabei auf kontinuierliche Weise, d.h., ohne Unterbrechung des Transportprozesses. Da zeitglich vermittels eines einziges Greifers mindestens zwei Gebinde bewegt werden, ist das Verfahren und die Handhabungsvorrichtung 1 zeitlich vom apparativen Aufwand her vorteilhaft gegenüber dem bekannten Stand der Technik. Dies bedeutet auch eine deutliche Kostenreduzierung. Die Verwendung von weniger technischen Mitteln bedeutet zudem einen geringeren Wartungsaufwand und verringert das Risiko von Produktionsausfällen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Handhabungsvorrichtung
- 2: Gebinde
- 3: Reihe
- 4: Einteilvorrichtung
- 5: Transportmittel
- 6: Förderband
- 7: Verarbeitungsvorrichtung
- 8: Abstand
- 9: Gebindeanordnung
- 10: Greifer
- 12: Greifflächen
- 13: Greifbereich
- 14: Abstand
- 15: Öffnung

- AB: Austrittsbereich
- B: Breite
- EB: Eintrittsbereich
- H: Höhe
- L: Länge
- TE: Transportebene
- TR: Transportrichtung
- X: Schwenkachse

## Patentansprüche

1. Verfahren zum Reduzieren von in n Reihen (3) in einer Transportrichtung (TR) in einer Transportgeschwindigkeit geförderten Artikeln oder Artikelgruppen (2) auf eine geringere Anzahl an weiterführenden Transportreihen, insbesondere auf (n-1) oder (n-2) oder (n-3) weiterführende Transportreihen (3-1, 3-3), wobei zumindest zwischen den einzelnen Artikeln oder Artikelgruppen (2) von mindestens einer einlaufenden und weiterführenden Transportreihe (3-1, 3-3) jeweils ein Abstand (8) ausgebildet ist, wobei die Länge des Abstands (8) mindestens dem Betrag einer Längserstreckung eines einzelnen Artikels oder einer einzelnen Artikelgruppe (2) in Transportrichtung (TR) entspricht, **dadurch gekennzeichnet, dass** mindestens zwei Artikel oder Artikelgruppen (2) der mindestens einen aufzulösenden Reihe (3-2) gleichzeitig vermittels einer Greifeinrichtung (10) in eine der Anzahl der Artikel oder Artikelgruppen (2) entsprechenden Anzahl von aufeinanderfolgenden Abständen (8) zwischen Artikeln oder Artikelgruppen (2) einer zu der aufzulösenden Reihe (3-2) benachbarten weiterführenden Transportreihe (3-1, 3-3) überführt werden.

2. Verfahren nach Anspruch 1, wobei die mindestens zwei Artikel oder Artikelgruppen (2) der aufzulösenden Reihe (3-2) gleichzeitig gegriffen und zeitgleich in die korrespondierende Anzahl aufeinanderfolgender Abstände (8) innerhalb der weiterführenden Transportreihe (3-1, 3-3) verschoben werden.

3. Verfahren nach Anspruch 2, wobei eine Bewegungsgeschwindigkeit der mindestens zwei Artikel oder Artikelgruppen (2) der aufzulösenden Reihe (3-2) gegenüber der Transportgeschwindigkeit der Artikel oder Artikelgruppen (2) der weiterführenden Transportreihe (3-1, 3-3) verzögert wird.

4. Verfahren nach Anspruch 2, wobei eine Bewegungsgeschwindigkeit der mindestens zwei Artikel oder Artikelgruppen (2) der aufzulösenden Reihe (3-2) gegenüber der Transportgeschwindigkeit der Artikel oder Artikelgruppen (2) der weiterführenden Transportreihe (3-1, 3-3) erhöht wird.

5. Verfahren nach Anspruch 3 oder 4, wobei die mindestens zwei Artikel oder Artikelgruppen (2) der aufzulösenden Reihe (3-2) eine zusätzliche Richtungskomponente senkrecht zur Transportrichtung (TR) erhalten.

6. Verfahren nach einem der voranstehenden Ansprüche, wobei die aus der aufzulösenden Reihe (3-2) in die weiterführende Transportreihe (3-1, 3-3) überführten Artikel oder Artikelgruppen (2) innerhalb der weiterführenden Transportreihe (3-1, 3-3) mit der Transportgeschwindigkeit bewegt werden.

7. Verfahren nach einem der voranstehenden Ansprüche, wobei die Artikel oder Artikelgruppen (2) zumindest innerhalb von mindestens einer einlaufenden und anschließend weiterführenden Transportreihe (3-1, 3-3) jeweils beabstandet zueinander angeordnet sind und wobei zumindest die Abstände (8) zwischen den Artikeln oder Artikelgruppen (2) innerhalb der mindestens einen einlaufenden und anschließend weiterführenden Transportreihe (3-1, 3-3) jeweils mindestens dem Betrag einer Längserstreckung der Artikel oder Artikelgruppen (2) in Transportrichtung (TR) entsprechen, wobei gleichzeitig mindestens zwei Artikel oder Artikelgruppen (2) einer aufzulösenden Reihe (3-2) gegriffen werden und wobei die mindestens zwei Artikel oder Artikelgruppen (2) gleichzeitig in eine der Anzahl der Artikel oder Artikelgruppen (2) entsprechenden Anzahl von aufeinanderfolgenden Abständen (8) zwischen Artikeln oder Artikelgruppen (2) einer zu der aufzulösenden Reihe (3-2) benachbarten weiterführenden Transportreihe (3-1, 3-3) überführt werden.

8. Verfahren nach einem der voranstehenden Ansprüche, wobei zwischen den Artikeln oder Artikelgruppen (2) der aufzulösenden Reihe (3-2) jeweils Abstände (8) ausgebildet sind, die den Abständen (8) zwischen den Artikeln oder Artikelgruppen (2) zumindest innerhalb der mindestens einen einlaufenden und anschließend weiterführenden Transportreihe (3-1, 3-3) entsprechen, wobei gleichzeitig mindestens zwei Artikel oder Artikelgruppen (2) der aufzulösenden Reihe (3-2) unter Beibehaltung des Abstands (8) gegriffen und in eine parallele, weiterführende Transportreihe (3-1, 3-3) überführt werden.

9. Vorrichtung mit einem Transportmittel (5, 6) und einer eine Greifeinrichtung umfassende Handhabungsvorrichtung (1), die so konfiguriert ist, dass im Betrieb der Vorrichtung ein Verfahren gemäß Anspruch 1 ausgeführt wird.

10. Vorrichtung nach Anspruch 9, wobei die Greifeinrichtung (10) mindestens zwei Greifeinheiten zum simultanen Greifen von mindestens zwei Artikeln oder Artikelgruppen (2) umfasst.

11. Vorrichtung nach Anspruch 10, wobei die Greifeinrichtung (10) zwei einander gegenüberliegend angeordnete Greifflächen (12) umfasst, zwischen denen die gegriffenen Artikel oder Artikelgruppen (2) gehalten werden, wobei die Greifflächen (12) jeweils in mindestens zwei Greifbereiche (13) unterteilt sind und wobei jeweils zwei einander direkt gegenüberliegende Greifbereiche (13) der einander gegenüberliegenden Greifflächen (12) eine Greifeinheit für einen Artikel oder eine Artikelgruppe (2) bilden.

12. Vorrichtung nach Anspruch 11, wobei die Greifbereiche (13) einer Greiffläche (12) zueinander beabstandet sind und wobei der Abstand (8) zwischen den Greifbereichen (13) einer Greiffläche (12) in etwa der Länge eines Abstands (8) zwischen den Artikeln oder Artikelgruppen (2) der aufzulösenden Reihe (3-2) entspricht.

13. Vorrichtung nach Anspruch 12, wobei im Bereich der Beabstandung der Greifbereiche (13) eine Öffnung ausgebildet ist, deren Größe mindestens einem maximalen Querschnitt eines Artikels oder einer Artikelgruppe (2) in einer Ebene parallel zur Transportrichtung (TR) entspricht.

14. Vorrichtung nach einem der Ansprüche 11 bis 13, wobei die Greifflächen (12) austauschbare Formatteile sind.

15. Vorrichtung nach einem der Ansprüche 9 bis 14, wobei die Greifeinrichtung (10) Rotationsmittel zur Drehung der mindestens zwei durch die Greifeinrichtung (10) gehaltenen Artikel oder Artikelgruppen umfasst, insbesondere, wobei die Handhabungsvorrichtung (1) eine Mehrzahl von individuell steuerbaren Rotationsmitteln umfasst, wobei jeder Greifeinheit ein Rotationsmittel zugeordnet ist.

## Claims

1. A method used to reduce articles or article groups (2) being conveyed at a transport speed in a transport direction (TR) in n rows (3) to a smaller number of continuing transport rows, in particular to (n-1) or (n-2) or (n-3) continuing transport rows (3-1, 3-3), wherein a space (8) is formed in each case at least between the individual articles or article groups (2) of at least one incoming and continuing transport row (3-1, 3-3), wherein the length of the space (8) corresponds to at least the value of a longitudinal extent of an individual article or of an individual article group (2) in transport direction (TR), **characterised in that** at least two articles or article groups (2) of the at least one row (3-2) to be broken up are transferred simultaneously by means of a gripping device (10) into a number of consecutive spaces (8) between articles or article groups (2) of a continuing transport row (3-1, 3-3) adjacent to the row (3-2) to be broken up, said number of consecutive spaces (8) corresponding to the number of the articles or article groups (2).

2. The method according to claim 1, wherein the at least two articles or article groups (2) of the row (3-2) to be broken up are gripped at the same time and shifted simultaneously into the corresponding number of consecutive spaces (8) within the continuing transport row (3-1, 3-3).

3. The method according to claim 2, wherein a movement speed of the at least two articles or article groups (2) of the row (3-2) to be broken up is slowed down in relation to the transport speed of the articles or article groups (2) of the continuing transport row (3-1, 3-3).

4. The method according to claim 2, wherein a movement speed of the at least two articles or article groups (2) of the row (3-2) to be broken up is increased in relation to the transport speed of the articles or article groups (2) of the continuing transport row (3-1, 3-3).

5. The method according to claim 3 or 4, wherein the at least two articles or article groups (2) of the row (3-2) to be broken up obtain an additional directional component perpendicular to the transport direction (TR).

6. The method according to one of the previous claims, wherein the articles or article groups (2) transferred from the row (3-2) to be broken up into the continuing transport row (3-1, 3-3) are being moved at the transport speed within the continuing transport row (3-1, 3-3).

7. The method according to one of the previous claims, wherein the articles or article groups (2) are disposed to be in each case spaced apart from each other at least within at least one incoming and subsequently continuing transport row (3-1, 3-3), and wherein at least the spaces (8) between the articles or article groups (2) within the at least one incoming and subsequently continuing transport row (3-1, 3-3) each correspond to at least the value of a longitudinal extent of the articles or article groups (2) in transport direction (TR), wherein at least two articles or article groups (2) of a row (3-2) to be broken up are gripped simultaneously, and wherein the at least two articles or article groups (2) are transferred simultaneously into a number of consecutive spaces (8) between articles or article groups (2) of a continuing transport row (3-1, 3-3) adjacent to the row (3-2) to be broken up, said number of consecutive spaces (8) corresponding to the number of the articles or article groups (2).

8. The method according to one of the previous claims, wherein spaces (8) are formed in each case between the articles or article groups (2) of the row (3-2) to be broken up, said spaces (8) corresponding to the spaces (8) between the articles or article groups (2) at least within the at least one incoming and subsequently continuing transport row (3-1, 3-3), wherein at least two articles or article groups (2) of the row (3-2) to be broken up are gripped simultaneously with the space (8) being maintained, and are transferred into a parallel, continuing transport row (3-1, 3-3).

9. An apparatus with a transport means (5, 6) and with a handling apparatus (1) comprising a gripping device, the handling apparatus (1) being configured such that a method according to claim 1 is carried out when the apparatus is in operation.

10. The apparatus according to claim 9, wherein the gripping device (10) comprises at least two gripping units used to simultaneously grip at least two articles or article groups (2).

11. The apparatus according to claim 10, wherein the gripping device (10) comprises two gripping surfaces (12) disposed opposite each other, between which gripping surfaces (12) the gripped articles or article groups (2) are held, wherein the gripping surfaces (12) are each subdivided into at least two gripping areas (13), and wherein in each case two gripping areas (13) of the gripping surfaces (12) that are disposed opposite each other form a gripping unit for an article or for an article group (2), said gripping areas (13) being disposed directly opposite each other.

12. The apparatus according to claim 11, wherein the gripping areas (13) of a gripping surface (12) are spaced apart from each other, and wherein the space (8) between the gripping areas (13) of a gripping surface (12) corresponds to about the length of a space (8) between the articles or article groups (2) of the row (3-2) to be broken up.

13. The apparatus according to claim 12 wherein an opening is formed in the area of the spacing of the gripping areas (13), with the size of said opening corresponding to at least a maximum cross section of an article or of an article group (2) in a plane parallel to the transport direction (TR).

14. The apparatus according to one of the claims 11 to 13, wherein the gripping surfaces (12) are exchangeable format parts.

15. The apparatus according to one of the claims 9 to 14, wherein the gripping device (10) comprises rotation means used to rotate the at least two articles or article groups being held by the gripping device (10), in particular wherein the handling apparatus (1) comprises a plurality of individually controllable rotation means, wherein each gripping unit has a rotation means associated with it.

## Revendications

1. Procédé destiné à réduire des articles ou groupes d'articles (2) transportés en n rangées (3) dans une direction de transport (TR) à une vitesse de transport, de manière à avoir un nombre plus petit de rangées de transport continuant leur chemin, en particulier (n-1) ou (n-2) ou (n-3) rangées de transport (3-1, 3-3) continuant leur chemin, dans lequel un intervalle (8) est formé respectivement au moins entre les articles individuels ou groupes d'articles (2) d'au moins une rangée de transport (3-1, 3-3) entrante et continuant son chemin, dans lequel la longueur de l'intervalle (8) correspond au moins à la valeur d'une extension longitudinale d'un seul article ou d'un seul groupe d'articles (2) dans la direction de transport (TR), **caractérisé par le fait qu'**au moins deux articles ou groupes d'articles (2) de ladite au moins une rangée à supprimer (3-2) sont transférés en même temps, par le biais d'un dispositif de préhension (10), dans un nombre d'intervalles (8) successifs entre articles ou groupes d'articles (2), correspondant au nombre d'articles ou de groupes d'articles (2), d'une rangée de transport (3-1, 3-3) continuant son chemin et voisine de la rangée à supprimer (3-2).

2. Procédé selon la revendication 1, dans lequel lesdits au moins deux articles ou groupes d'articles (2) de la rangée à supprimer (3-2) sont saisis simultanément et sont déplacés en même temps dans le nombre correspondant d'intervalles (8) successifs à l'intérieur de la rangée de transport (3-1, 3-3) continuant son chemin.

3. Procédé selon la revendication 2, dans lequel une vitesse de déplacement desdits au moins deux articles ou groupes d'articles (2) de la rangée à supprimer (3-2) est ralentie par rapport à la vitesse de transport des articles ou groupes d'articles (2) de la rangée de transport (3-1, 3-3) continuant son chemin.

4. Procédé selon la revendication 2, dans lequel une vitesse de déplacement desdits au moins deux articles ou groupes d'articles (2) de la rangée à supprimer (3-2) est augmentée par rapport à la vitesse de transport des articles ou groupes d'articles (2) de la rangée de transport (3-1, 3-3) continuant son chemin.

5. Procédé selon la revendication 3 ou 4, dans lequel lesdits au moins deux articles ou groupes d'articles (2) de la rangée à supprimer (3-2) reçoivent une composante de direction supplémentaire perpendiculaire à la direction de transport (TR).

6. Procédé selon l'une quelconque des revendications précédentes, dans lequel les articles ou groupe d'articles (2) transférés de la rangée à supprimer (3-2) à la rangée de transport (3-1, 3-3) continuant son chemin sont déplacés à la vitesse de transport à l'intérieur de la rangée de transport (3-1, 3 -3) continuant son chemin.

7. Procédé selon l'une quelconque des revendications précédentes, dans lequel les articles ou groupes d'articles (2) sont disposés respectivement à distance les uns des autres au moins à l'intérieur d'au moins une rangée de transport (3-1, 3-3) entrante et continuant ensuite son chemin, et dans lequel au moins les intervalles (8) entre les articles ou groupes d'articles (2) à l'intérieur de ladite au moins une rangée de transport (3-1, 3-3) entrante et continuant ensuite son chemin correspondent chacun au moins à la valeur d'une extension longitudinale des articles ou groupes d'articles (2) dans la direction de transport (TR), dans lequel au moins deux articles ou groupes d'articles (2) d'une rangée à supprimer (3-2) sont saisis en même temps, et dans lequel lesdits au moins deux articles ou groupes d'articles (2) sont transférés en même temps dans un nombre d'intervalles (8) successifs entre articles ou groupes d'articles (2), correspondant au nombre d'articles ou de groupes d'articles (2), d'une rangée de transport (3-1, 3-3) continuant son chemin et voisine de la rangée à supprimer (3-2).

8. Procédé selon l'une quelconque des revendications précédentes, dans lequel des intervalles (8) sont réalisés respectivement entre les articles ou groupes d'articles (2) de la rangée à supprimer (3-2), qui correspondent aux intervalles (8) entre les articles ou groupes d'articles (2) au moins à l'intérieur de ladite au moins une rangée de transport (3-1, 3-3) entrante et continuant ensuite son chemin, dans lequel au moins deux articles ou groupes d'articles (2) de la rangée à supprimer (3-2) sont saisis en même temps tout en maintenant l'intervalle (8) et sont transférés dans une rangée de transport (3-1, 3-3) parallèle continuant son chemin.

9. Dispositif comprenant un moyen de transport (5, 6) et un dispositif de manipulation (1) comprenant un dispositif de préhension, qui est configuré de manière à ce que, lors du fonctionnement du dispositif, un procédé selon la revendication 1 soit mis en oeuvre.

10. Dispositif selon la revendication 9, dans lequel le dispositif de préhension (10) comprend au moins deux unités de préhension pour saisir simultanément au moins deux articles ou groupes d'articles (2).

11. Dispositif selon la revendication 10, dans lequel le dispositif de préhension (10) comprend deux surfaces de préhension (12) qui sont disposées en regard les unes des autres et entre lesquelles sont maintenus les articles ou groupes d'articles (2) saisis, dans lequel lesdites surfaces de préhension (12) sont divisées chacune en au moins deux zones de préhension (13), et dans lequel respectivement deux zones de préhension (13) directement opposées des surfaces de préhension (12) opposées forment une unité de préhension pour un article ou un groupe d'articles (2).

12. Dispositif selon la revendication 11, dans lequel les zones de préhension (13) d'une surface de préhension (12) sont espacées les unes des autres, et dans lequel l'intervalle (8) entre les zones de préhension (13) d'une surface de préhension (12) correspond à peu près à la longueur d'un intervalle (8) entre les articles ou groupes d'articles (2) de la rangée à supprimer (3-2).

13. Dispositif selon la revendication 12, dans lequel une ouverture est ménagée au niveau de l'espacement des zones de préhension (13), dont la taille correspond au moins à une section transversale maximale d'un article ou d'un groupe d'articles (2) dans un plan parallèle à la direction de transport (TR).

14. Dispositif selon l'une quelconque des revendications 11 à 13, dans lequel les surfaces de préhension (12) sont des parties de format échangeables.

15. Dispositif selon l'une quelconque des revendications 9 à 14, dans lequel le dispositif de préhension (10) comprend des moyens de rotation pour faire tourner lesdits au moins deux articles ou groupes d'articles (2) maintenus par le dispositif de préhension (10), en particulier, dans lequel le dispositif de manipulation (1) comprend une pluralité de moyens de rotation aptes à être commandés individuellement, à chaque unité de préhension étant associé un moyen de rotation.
